# EUROPÄISCHE PATENTSCHRIFT

(11) **EP 2 603 943 B1**
(45) Veröffentlichungstag und Bekanntmachung des Hinweises auf die Patenterteilung: **09.08.2017**
(21) Anmeldenummer: 11726142.0
(22) Anmeldetag: 16.06.2011
(51) Int. Cl.: H01M 2/10, H01M 10/0525

(54) **BATTERIE, VERFAHREN ZUR HERSTELLUNG EINER BATTERIE UND KRAFTFAHRZEUG**
BATTERY, METHOD FOR PRODUCING A BATTERY, AND MOTOR VEHICLE
BATTERIE, PROCÉDÉ DE FABRICATION D'UNE BATTERIE ET VÉHICULE AUTOMOBILE

(30) Priorität: 13.08.2010 DE 102010039323
(43) Veröffentlichungstag der Anmeldung: 19.06.2013
(73) Patentinhaber: Robert Bosch GmbH, 70442 Stuttgart (DE); Samsung SDI Co., Ltd., Yongin-si Gyeonggi-do 446-577 (KR)
(72) Erfinder: GLESS, Michael, 70437 Stuttgart-Zazenhausen (DE); ANGERBAUER, Ralf, 71696 Möglingen (DE)
(74) Vertreter: Bee, Joachim
(86) Internationale Anmeldenummer: PCT/EP2011/059998
(87) Internationale Veröffentlichungsnummer: WO 2012/019810

(56) Entgegenhaltungen:
- EP-A1- 1 378 389
- EP-A1- 2 110 870
- DE-A1- 3 150 652
- DE-A1-102007 007 956
- DE-U1-202009 015 277

## Beschreibung

Die vorliegende Erfindung betrifft eine Batterie, insbesondere eine Lithium-Ionen-Batterie, die wenigstens ein Batteriemodul, welches wenigstens eine Batteriezelle aufweist, und eine zur Aufstellung und/oder Fixierung des Batteriemoduls dienende Grundplatte umfasst, wobei das Batteriemodul derart mit der Grundplatte verbunden oder verbindbar ist, dass zumindest der translatorische Freiheitsgrad des Batteriemoduls senkrecht zur Grundplatte blockiert ist.

Außerdem betrifft die vorliegende Erfindung ein Verfahren zur Montage eines Batteriemoduls auf oder an einer Grundplatte zur Herstellung einer Batterie, insbesondere einer Lithium-Ionen-Batterie, wobei das Batteriemodul derart mit der Grundplatte verbunden wird, dass zumindest der translatorische Freiheitsgrad des Batteriemoduls senkrecht zur Grundplatte blockiert ist.

### Stand der Technik

Eine Batterie, die eine oder mehrere galvanische Batteriezellen umfasst, dient als elektrochemischer Energiespeicher und Energiewandler. Bei der Entladung der Batterie bzw. der jeweiligen Batteriezelle wird in der Batterie gespeicherte chemische Energie durch Interkalation in elektrische Energie umgewandelt. Diese elektrische Energie kann somit je nach Bedarf von einem Nutzer angefordert werden.

Insbesondere in Hybrid- und Elektrofahrzeugen werden in so genannten Batteriepacks Lithium-Ionen-Batterien oder Nickel-Metallhydrid-Batterien eingesetzt, die aus einer großen Anzahl in Serie geschalteter elektrochemischer Zellen bestehen.

Zur Herstellung von Batterien werden Batteriezellen, die zu Modulen zusammengefasst sind, in Gehäusen fixiert. Die Gehäuse dienen dabei dem Schutz der Batteriezellen sowie der Temperierung und dem Transport der Batteriezellen.

Aus der WO 2009/038320A1 ist ein Batteriezellenmodul bekannt, bei dem einzelne Batteriezellen zwischen seitlichen Platten angeordnet sind, die abgewinkelte Abschnitte aufweisen, durch die hindurch Schraubverbindungen zur Fixierung der abgewinkelten Abschnitte aneinander geführt sind. Die seitlichen Platten alleine reichen jedoch nicht zur Fixierung der Batteriezellen im Gehäuse aus.

Die EP 1 378 389 A1 offenbart eine Batterie, die ein Basiselement umfasst, wobei die Batterie derart mit dem Basiselement verbunden ist, dass der translatorische Freiheitsgrad der Batterie senkrecht zum Basiselement blockiert ist. Die Blockierung ist mittels eines Verriegelungselementes realisiert, welches senkrecht zur Richtung des zu blockierenden Freiheitsgrades derart bewegbar ist, dass ein Formelement der Batterie von einem Verriegelungsabschnitt hinterschnitten wird.

In der DE 10 2007 007956 A1 wird eine Befestigungsvorrichtung für eine Fahrzeugbatterie mit einem Batterieträger mit einer Aufstandsfläche für die Batterie beschrieben. Es wird dabei eine Halteklemme mit einer Gegenschräge zum Erzeugen einer auf die Batterie wirkenden Andruckkraft und eine Feststelleinrichtung genutzt.

Die DE 20 2009 015277 U1 lehrt eine Batterie, umfassend zumindest einen Griff und eine Arretiereinrichtung zum Befestigen der Batterie an einem Batteriehalter, die Arretiereinrichtung mittels des Griffs betätigbar ist. Es erfolgt dabei eine formschlüssige Fixierung der Batterie am Batteriehalter

Zur Fixierung der Batteriezellen werden üblicherweise Schraubverbindungen eingesetzt, die eine feste mechanische Verbindung zwischen dem Gehäuse und den Batteriezellen realisieren. Da Bauraum seitlich neben den Batteriezellen oftmals nur sehr begrenzt zur Verfügung steht und die Zugänglichkeit zu auf der Oberseite der Batteriezellen angeordneten Terminals gewährleistet sein muss, wird die mechanische Verbindung zwischen Gehäuse und Batteriezellen für gewöhnlich von der Unterseite des Gehäuses aus vorgenommen. Dies bedingt jedoch montagetechnologische Schwierigkeiten, da entweder ein Verschraubungsprozess von unten am Gehäuse durchgeführt werden muss oder das Gehäuse zum Zweck der Montage gedreht werden muss, wobei gleichzeitig die Zellen im Gehäuse zumindest vorübergehend zu fixieren sind.

### Offenbarung der Erfindung

Erfindungsgemäß wird eine Batterie, insbesondere eine Lithium-Ionen-Batterie, zur Verfügung gestellt, die wenigstens ein Batteriemodul, welches wenigstens eine Batteriezelle aufweist, und eine zur Aufstellung und/oder zur Fixierung des Batteriemoduls dienende Grundplatte umfasst, wobei das Batteriemodul derart mit der Grundplatte verbunden oder verbindbar ist, dass zumindest der translatorische Freiheitsgrad des Batteriemoduls senkrecht zur Grundplatte blockiert ist. Die Blockierung ist mittels eines Verriegelungselementes realisiert, welches mit zumindest einer Bewegungskomponente im Wesentlichen senkrecht zur Richtung des zu blockierenden Freiheitsgrades derart bewegbar ist, dass wenigstens ein Formelement der Grundplatte von einem am Verriegelungselement angeordneten Verriegelungsabschnitt hinterschnitten wird. Das Verriegelungselement ist ein Bestandteil des Batteriemoduls. Es ist erfindungsgemäß vorgesehen, dass das Batteriemodul einen Zuganker aufweist, der ein Keilelement sowie wenigstens ein relativ zum Keilelement bewegliches Spreizelement umfasst, wobei das Keilelement derart bewegbar ist oder positioniert ist, dass zumindest ein Abschnitt des Spreizelementes mit zumindest einer Bewegungskomponente senkrecht zur Richtung des zu blockierenden Freiheitsgrades bewegbar ist, so dass das die Funktion des Verriegelungsabschnittes übernehmende Spreizelement das durch die Grundplatte ausgebildete Formelement zumindest abschnittsweise hinterschneidet.

Es lässt sich somit eine formschlüssige Arretierung des Batteriemoduls in dem blockierten Freiheitsgrad realisieren. Die Batterie kann eine Lithium-Ionen-Batterie oder auch eine Nickel-Metallhydrid-Batterie sein, in Form eines Zellpaketes oder einer einzelnen Zelle. Durch die Blockierung des translatorischen Freiheitsgrades des Batteriemoduls in Richtung der Grundplatte ist das Batteriemodul in seiner Bewegung senkrecht zur Grundplatte blockiert, nämlich in dem Richtungssinn zur Grundplatte hin durch die Anlage an der Grundplatte und im entgegengesetzten Richtungssinn, also von der Grundplatte weg, durch die Hinterschneidung des Formelementes vom Verriegelungsabschnitt.

Mit der Hinterschneidung ist dabei gemeint, dass sich das Formelement und der Verriegelungsabschnitt in einem Bereich überlappen, in dem die Fläche der Projektion des Verriegelungsabschnittes in Richtung des zu blockierenden Freiheitsgrades zumindest genauso groß ist wie die Fläche der Projektion des Formelementes in derselben Richtung, so dass das Formelement zwischen dem Verriegelungselement beziehungsweise dessen Verriegelungsabschnitt und der Grundplatte oder dem Batteriemodul arretiert ist.

### Vorteile der Erfindung

Zur Herstellung der Batterie ist das Batteriemodul mit wenigen Handgriffen, gegebenenfalls unter Nutzung von standardisierten Spanneinrichtungen, und innerhalb kürzester Zeit an die Grundplatte, die Bestandteil eines Batteriegehäuses sein kann, montierbar. Dabei ist die Montage mit relativ geringer Fehleranfälligkeit hinsichtlich der Positionierung sowie der aufzubringenden Befestigungskräfte durchführbar. Insbesondere gegenüber den herkömmlichen Schraubverbindungen zwischen Grundplatte und Batteriemodul ist bei der erfindungsgemäßen Batterie kein schiefes Ansetzen von Schraubbolzen sowie keine Über- oder Unterdimensionierung von Anzugsmomenten zu befürchten. Die erfindungsgemäße Batterie ist ohne die Zuhilfenahme von Werkzeugen montierbar. Es ist kein Wenden des Gehäuses und kein Montageprozess unterhalb des Batteriemoduls notwendig. Der gesamte Montageprozess ist in einfacher Weise automatisiert durchführbar.

Die Grundplatte ist zwischen dem Verriegelungselement beziehungsweise dessen Verriegelungsabschnitt und der Trägerplatte angeordnet.

Dabei kann das Keilelement fest mit dem Zuganker verbunden sein und das Spreizelement schwenkbar am Zuganker angeordnet sein, so dass durch Einleitung einer Zugkraft in den Zuganker das Keilelement auf oder in das Spreizelement gezogen wird und dieses somit verschiebt, verschwenkt oder aufweitend verformt.

Alternativ kann jedoch das Keilelement auch verschiebbar auf dem Zuganker angeordnet sein und das Spreizelement schwenkbar am Zuganker angeordnet sein, so dass bei Kraftbeaufschlagung des Keilelementes dieses auf das Spreizelement oder in das Spreizelement gezogen wird und das Spreizelement somit verschiebt, verschwenkt oder aufweitend verformt, so dass es sich an das Formelement an der Grundplatte anlegt und den translatorischen Freiheitsgrad des Zugankers beziehungsweise des Batteriemoduls senkrecht zur Grundplatte in einem Richtungssinn blockiert.

Das Spreizelement kann eine oder mehrere Spreizbacken aufweisen oder als ein elastisches Element ausgeführt sein, so dass zum Beispiel bei Ausbildung des Formelementes als ein Loch in der Grundplatte sich die Spannbacken oder das elastische Element durch die keilwirkungsbedingte Aufweitung an die Lochwandung und/oder an das das Loch begrenzende Material anlegen.
Das heißt, dass eine vorteilhafte Ausgestaltung des Formelementes der zweiten Ausführungsvariante der erfindungsgemäßen Batterie ein Loch in der Grundplatte ist.

Dieses Loch weist vorzugsweise über seine Länge einen inkonstanten Querschnitt auf. Es kann zum Beispiel eine konische beziehungsweise kegelstumpfförmige oder pyramidenstumpfförmige Ausbildung haben, wobei die verjüngte Seite des Loches in Richtung des Batteriemoduls ausgerichtet ist.

Bei Anordnung eines Loches mit inkonstantem Querschnitt in der Grundplatte bildet die Lochwandung das Formelement aus, so dass das Spreizelement an der Lochwandung anliegt.

In einer Ausführungsform eines Loches mit konstantem Querschnitt bildet Material, welches das Loch zumindest abschnittsweise umgibt, das Formelement aus, so dass das Spreizelement oder die Spreizelemente an diesem Material anliegen.
In besonders bevorzugter Ausführung ist vorgesehen, dass die Batterie ein Gehäuse aufweist, welches die Batteriezellen im Wesentlichen umgibt, wobei die Grundplatte Bestandteil des Gehäuses ist. Das heißt, dass die Batterie ein Gehäuse umfasst, welches die Grundplatte aufweist, wobei das Batteriemodul beziehungsweise die vom Batteriemodul umfassten Batteriezellen im Gehäuse auf der Grundplatte, gegebenenfalls unter Zuhilfenahme einer Trägerplatte, angeordnet sind.

In einer alternativen Ausgestaltung einer Batterie ist vorgesehen, dass das Verriegelungselement im Wesentlichen senkrecht zur Richtung des zu blockierenden Freiheitsgrades an der Grundplatte verschiebbar ist und in Richtung des zu blockierenden Freiheitsgrades an der Grundplatte arretiert ist. Der Verriegelungsabschnitt ist ein Bestandteil des Verriegelungselementes. Vorzugsweise ist das Formelement als Bestandteil des Batteriemoduls eine Trägerplatte, an beziehungsweise auf der einzelne Zellen des Batteriemoduls angeordnet sind. Das verschiebbare Verriegelungselement kann zum Beispiel mit dem Verriegelungsabschnitt einen Randbereich der Trägerplatte umgreifen und diesen somit an dieser Stelle hinterschneiden.

Die Trägerplatte ist in dieser Ausgestaltung somit zwischen dem Verriegelungsabschnitt und der Grundplatte angeordnet.

In vorteilhafter Ausgestaltung ist dabei am Verriegelungselement eine kraftausübende Einrichtung angeordnet, mit der das Verriegelungselement in eine derartige Position bewegbar ist oder in einer derartigen Position gehalten wird, dass der Verriegelungsabschnitt des Verriegelungselementes das Formelement des Batteriemoduls, also zum Beispiel den Randbereich der Trägerplatte, hinterschneidet. Gegebenenfalls kann dabei der Verriegelungsabschnitt und/oder das Formelement eine Schräge aufweisen, die eine Keilwirkung zwischen Verriegelungsabschnitt und Formelement realisiert, so dass durch diese Keilwirkung eine Kraft mit einer Komponente in Richtung des zu blockierenden Freiheitsgrades ausgeübt wird und dadurch das Batteriemodul beziehungsweise dessen Trägerplatte auf die Grundplatte gedrückt wird. Somit lässt sich auf Grund der dabei auftretenden Reibkräfte neben der formschlüssigen Arretierung auch eine kraftschlüssige Arretierung bewirken.

Hinzukommend oder alternativ zur genannten Schräge ist es in weiterer Ausgestaltung möglich, dass das Verriegelungselement im Wesentlichen senkrecht zur Richtung des zu blockierenden Freiheitsgrades spielbehaftet an der Grundplatte verschiebbar ist und eine Einrichtung zur Kraftbeaufschlagung des Verriegelungselementes in Richtung des zu blockierenden Freiheitsgrades vorhanden ist. Mit dieser Einrichtung zur Kraftbeaufschlagung kann das Verriegelungselement beziehungsweise dessen Verriegelungsabschnitt auf das Formelement des Batteriemoduls gedrückt werden und das Batteriemodul somit auf die Grundplatte gedrückt werden. Das heißt, dass in dieser Ausgestaltung zusätzlich zur Verriegelung auch eine Verspannung erfolgt, womit zusätzlich eine kraftschlüssige Arretierung bewirkt wird.

Trotz der Möglichkeit der werkzeugfreien Montage ist durch die Aufbringung von Spannkräften eine spielfreie Positionierung und Fixierung des Batteriemoduls auf der Grundplatte möglich.

Die vorliegende Erfindung betrifft außerdem ein Verfahren zur Montage eines Batteriemoduls auf oder an einer Grundplatte zur Herstellung einer Batterie, insbesondere zur Herstellung einer Lithium-Ionen-Batterie, wobei das Batteriemodul derart mit der Grundplatte verbunden wird, dass zumindest der translatorische Freiheitsgrad des Batteriemoduls senkrecht zur Grundplatte blockiert ist. Die Blockierung wird mittels eines Verriegelungselementes realisiert, welches mit zumindest einer Bewegungskomponente im Wesentlichen senkrecht zur Richtung des zu blockierenden Freiheitsgrades derart bewegt wird, dass wenigstens ein Formelement der Grundplatte von einem am Verriegelungselement angeordneten Verriegelungsabschnitt hinterschnitten wird.

Zur Herstellung der erfindungsgemäßen Batterie ist vorgesehen, dass das Verriegelungselement ein Bestandteil des Batteriemoduls ist. Das Verriegelungselement weist einen Zuganker auf, der ein Keilelement sowie wenigstens ein relativ zum Keilelement bewegliches Spreizelement umfasst, wobei das Keilelement derart bewegt wird, dass zumindest ein Abschnitt des Spreizelementes mit zumindest einer Bewegungskomponente senkrecht zur Richtung des zu blockierenden Freiheitsgrades bewegt wird, so dass das die Funktion des Verriegelungsabschnittes übernehmende Spreizelement das durch die Grundplatte ausgebildete Formelement zumindest abschnittsweise hinterschneidet.

Das erfindungemäße Verfahren zur Montage der Batterie weist den Vorteil der schnellen Durchführbarkeit sowie leichten Automatisierbarkeit unter Vermeidung von typischen Montagefehlern auf. Eine Drehung eines Gehäuses, dessen Bestandteil die Grundplatte ist, ist nicht erforderlich. Es sind keine Verbindungsprozesse unterhalb der Grundplatte durchzuführen, obwohl die Verbindung zwischen Grundplatte und Batteriemodul in der zweiten Ausführungsvariante an der Unterseite der Grundplatte realisiert wird.

Die Erfindung ergänzend wird ein Kraftfahrzeug, insbesondere ein elektromotorisch antreibbares Kraftfahrzeug zur Verfügung gestellt, welches wenigstens eine erfindungsgemäße Batterie umfasst, wobei die Batterie mit einem Antriebssystem des Kraftfahrzeuges verbunden ist.

### Zeichnungen

Nachfolgend wird die vorliegende Erfindung anhand der in den beiliegenden Zeichnungen dargestellten Ausführungsbeispiele erläutert. Es zeigen:
Figur 1 eine Batterie in einer nicht von der Erfindung umfassten Ausführungsvariante,
Figur 2 ein Batteriemodul und eine Grundplatte im voneinander getrennten Zustand zur Herstellung einer erfindungsgemäßen Batterie, und
Figur 3 eine Grundplatte der erfindungsgemäßen Batterie.

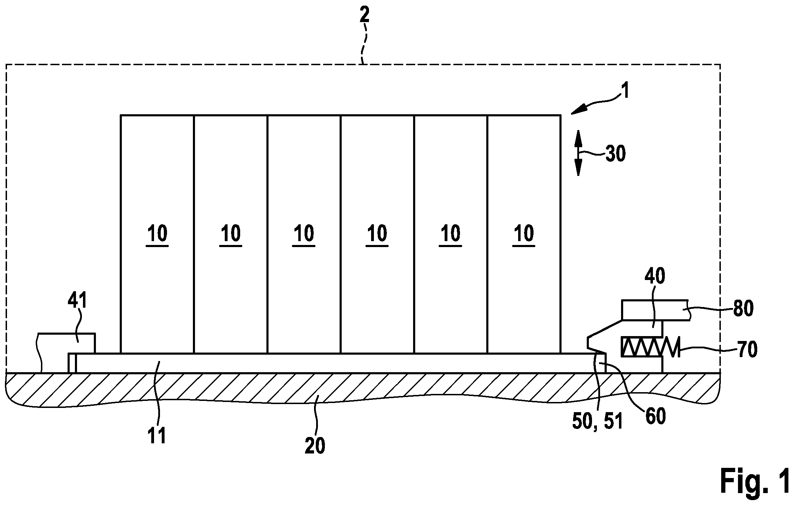

In Figur 1 ist ein Batteriemodul 1 dargestellt, welches eine Mehrzahl von Batteriezellen 10 umfasst. Die Batteriezellen 10 ruhen auf einer Trägerplatte 11, an der sie mechanisch befestigt sind. Die Trägerplatte 11 ist ein Bestandteil des Batteriemoduls 1. Das Batteriemodul 1 ist mit seiner Unterseite, nämlich mit seiner Trägerplatte 11, auf einer Grundplatte 20 aufgestellt. Diese Grundplatte 20 kann zum Beispiel die untere Seite eines Gehäuses 2 sein, wie es mit der gestrichelten Linie in Figur 1 angedeutet ist. Auf der Grundplatte 20 ist ein Verriegelungselement 40 verschiebbar angeordnet. Das Verriegelungselement 40 kann im Wesentlichen senkrecht zur Richtung des zu blockierenden translatorischen Freiheitsgrades 30 auf der Grundplatte 20 verschoben werden, ihm selbst ist der translatorische Freiheitsgrad 30 durch eine geeignete, hier nicht dargestellte Einrichtung, genommen. Das Verriegelungselement 40 weist einen Verriegelungsabschnitt 50 auf, der in der dargestellten Position ein Formelement 60, welches durch den Rand der Trägerplatte 11 ausgebildet ist, hinterschneidet. Auf der dem Verriegelungselement 40 gegenüberliegenden Seite ist ein einfacher Halter 41 angeordnet, der ebenfalls einen Randbereich der Trägerplatte 11 hinterschneidet.

Aus Figur 1 ist ersichtlich, dass das Batteriemodul 1 in seinem translatorischen Freiheitsgrad 30 blockiert ist, da eine Bewegung nach unten in Richtung der Grundplatte 20 durch diese blockiert wird und in entgegengesetzter Richtung die Bewegung durch den Verriegelungsabschnitt 50 am Verriegelungselement 40 beziehungsweise durch den Halter 41 blockiert ist.

In bevorzugter Ausführungsform wirkt auf das Verriegelungselement 40 im Wesentlichen senkrecht zum translatorischen Freiheitsgrad 30 die Kraft einer kraftausübenden Einrichtung 70, die bevorzugt wie dargestellt eine Druckfeder ist. Diese kraftausübende Einrichtung 70 gewährleistet, dass ständig eine Hinterschneidung des Formelementes 60 an der Trägerplatte 11 durch den Verriegelungsabschnitt 50 am Verriegelungselement 40 stattfindet. Damit wird dauerhaft eine formschlüssige Fixierung des Batteriemoduls 1 auf der Grundplatte 20 zumindest im translatorischen Freiheitsgrad 30 erreicht.

Zur Realisierung von Fixierungen des Batteriemoduls 1 in weiteren Freiheitsgraden und/oder zur weiteren Sicherung des fixierten Zustandes ist am Verriegelungsabschnitt 50 und/oder am Formelement 60 eine Schräge 51 angeordnet, die eine Keilwirkung zwischen Verriegelungsabschnitt 50 und Formelement 60 realisiert, so dass es auf Grund der auftretenden Reibkräfte auch zu einer kraftschlüssigen Verbindung zwischen Verriegelungsabschnitt 50 und Formelement 60 kommt. Eine weitere Wirkung dieser Schräge 51 ist ein Andrücken der Trägerplatte 11 auf die Grundplatte 20 und auch dadurch die Erzeugung eines Kraftschlusses.

Um eine spielfreie Positionierung und Fixierung des Batteriemoduls 1 auf der Grundplatte 20 zu gewährleisten, ist in dieser Ausführungsvariante bevorzugt vorgesehen, dass in Richtung des translatorischen Freiheitsgrades 30 auf das Verriegelungselement 40 die Druckkraft einer Einrichtung zur Kraftbeaufschlagung 80 des Verriegelungselementes 40 wirkt. Diese Einrichtung zur Kraftbeaufschlagung 80 verhindert ein Abheben des Verriegelungselementes 40 von der Grundplatte 20 und gegebenenfalls auch die Anpressung des Verriegelungsabschnittes 50 auf das Formelement 60 und die Anpressung der Trägerplatte 11 auf die Grundplatte 20.

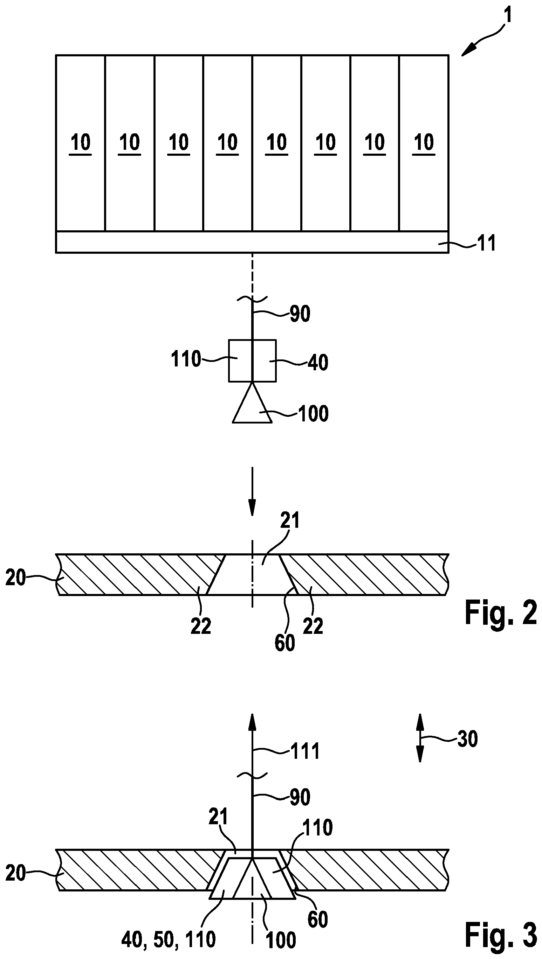

In den Figuren 2 und 3 ist die erfindungsgemäße Anordnung eines Batteriemoduls 1 auf der Grundplatte 20 dargestellt.

Dabei wurde aus Gründen der Übersichtlichkeit auf die Darstellung des Gehäuses, dessen Bestandteil die Grundplatte 20 ist, verzichtet.

Das Batteriemodul 1 umfasst in dieser Ausgestaltungsvariante einen Zuganker 90, der mit der Trägerplatte 11 durch eine mit der gestrichelten Linie angedeutete mechanische Verbindung verbunden ist. Am Zuganker 90 ist ein Keilelement 100 sowie ein Spreizelement 110 angeordnet. Der Querschnitt des Keilelementes 100 sowie des Spreizelementes 110 ist in der Position gemäß Figur 1 kleiner als der eines Loches 21, welches in der Grundplatte 20 angeordnet ist. Dadurch lässt sich, wie in Figur 2 gezeigt, der Zuganker 90 mitsamt dem Keilelement 100 und dem Spreizelement 110 in das Loch 21 einführen.

In Figur 3 ist zur Wahrung der besseren Übersichtlichkeit nur noch die Grundplatte 20 mit darin angeordnetem Keilelement 100 und Spreizelement 110 dargestellt. Das Keilelement 100 ist durch Aufbringung einer Kraft 111 in das Spreizelement 110 gezogen oder geschoben worden, so dass das Spreizelement 110 aufgeweitet und/oder verformt wurde, so dass es an der Wandung des Loches 21 anliegt. Bedingt durch die konische Form des Loches 21 ist bei fester Anordnung des Keilelementes 100 am Zuganker 90 eine Bewegung des Zugankers 90 in Richtung der Kraft 111 nunmehr unterbunden.

Die Einführung des Keilelementes 100 in das Spreizelement kann durch Einleitung einer Zugkraft in den Zuganker bei fester Anordnung des Keilelementes am Zuganker realisiert werden oder auch durch ein Hereindrücken des Keilelementes 100 in das Spreizelement 110 durch Aufbringung einer Druckkraft auf das Keilelement 100.

Bevorzugt wird die Montage durch Einleitung einer Zugkraft 111 in den Zuganker nach dem Prinzip einer Blindnietung vorgenommen, wobei das Keilelement 100 fest am Zuganker 90 angeordnet ist. Bei Abstützung der Trägerplatte 11 auf der Grundplatte 20 sind somit dem Batteriemodul 1 die Bewegungen in Richtung des translatorischen Freiheitsgrades 30 genommen.

Das Spreizelement 110 ist in dieser Ausgestaltung gleichzeitig das Verriegelungselement 40, welches mit zumindest einer Bewegungskomponente im Wesentlichen senkrecht zur Richtung des zu blockierenden Freiheitsgrades 30 derart bewegt wird, so dass sein Verriegelungsabschnitt 50 das Formelement 60, welches durch die konische Wandung des Loches 21 ausgebildet ist und somit ein Bestandteil der Grundplatte 20 ist, hinterschneidet.

## Patentansprüche

1. Batterie, insbesondere Lithium-Ionen-Batterie, die wenigstens ein Batteriemodul (1), welches wenigstens eine Batteriezelle (10) aufweist, und eine zur Aufstellung und/oder Fixierung des Batteriemoduls (1) dienende Grundplatte (20) umfasst, wobei das Batteriemodul (1) derart mit der Grundplatte (20) verbunden oder verbindbar ist, dass zumindest der translatorische Freiheitsgrad (30) des Batteriemoduls (1) senkrecht zur Grundplatte (20) blockiert ist,
, und wobei die Blockierung mittels eines Verriegelungselementes (40) realisiert ist, welches mit zumindest einer Bewegungskomponente im Wesentlichen senkrecht zur Richtung des zu blockierenden Freiheitsgrades (30) derart bewegbar ist, dass wenigstens ein Formelement (60) der Grundplatte (20) von einem am Verriegelungselement (40) angeordneten Verriegelungsabschnitt (50) hinterschnitten wird, und das Verriegelungselement (40) ein Bestandteil des Batteriemoduls (1) ist, **dadurch gekennzeichnet, dass** das Batteriemodul (1) einen Zuganker (90) aufweist, der ein Keilelement (100) sowie wenigstens ein relativ zum Keilelement (100) bewegliches Spreizelement (110) umfasst, wobei das Keilelement (100) derart bewegbar ist oder positioniert ist, dass zumindest ein Abschnitt des Spreizelementes (110) mit zumindest einer Bewegungskomponente senkrecht zur Richtung des zu blockierenden Freiheitsgrades (30) bewegbar ist, so dass das die Funktion des Verriegelungsabschnittes (50) übernehmende Spreizelement (110) das durch die Grundplatte (20) ausgebildete Formelement (60) zumindest abschnittsweise hinterschneidet.

2. Batterie nach Anspruch 1, wobei das Formelement (60) durch das Umgebungsmaterial (22) eines Lochs (21) in der Grundplatte (20) ausgebildet ist.

3. Batterie nach Anspruch 2, **dadurch gekennzeichnet**, wobei dass das Loch (21) über seine Länge einen inkonstanten Querschnitt aufweist.

4. Batterie nach wenigstens einem der vorhergehenden Ansprüche, wobei die Batterie ein Gehäuse (2) aufweist, welches die Batteriezellen (10) im Wesentlichen umgibt, wobei die Grundplatte (20) ein Bestandteil des Gehäuses (2) ist.

5. Verfahren zur Montage eines Batteriemoduls (1) auf oder an einer Grundplatte (20) zur Herstellung einer Batterie, insbesondere einer Lithium-Ionen-Batterie, wobei dass Batteriemodul (1) derart mit der Grundplatte (20) verbunden wird, dass zumindest der translatorische Freiheitsgrad (30) des Batteriemoduls (1) senkrecht zur Grundplatte (20) blockiert ist, **dadurch gekennzeichnet,**
**dass** die Blockierung mittels eines Verriegelungselementes (40) realisiert wird, welches mit zumindest einer Bewegungskomponente im Wesentlichen senkrecht zur Richtung des zu blockierenden Freiheitsgrades (30) derart bewegt wird, dass wenigstens ein Formelement (60) der Grundplatte (20) von einem am Verriegelungselement (40) angeordneten Verriegelungsabschnitt (50) hinterschnitten wird, wobei das Verriegelungselement (40) ein Bestandteil des Batteriemoduls (1) ist und das Batteriemodul (1) einen Zuganker (90) aufweist, der ein Keilelement (100) sowie wenigstens ein relativ zum Keilelement (100) bewegliches Spreizelement (110) umfasst, wobei das Keilelement (100) derart bewegt wird, dass zumindest ein Abschnitt des Spreizelementes (110) mit zumindest einer Bewegungskomponente senkrecht zur Richtung des zu blockierenden Freiheitsgrades (30) bewegt wird, so dass das die Funktion des Verriegelungsabschnittes (50) übernehmende Spreizelement (110) das durch die Grundplatte (20) ausgebildete Formelement (60) zumindest abschnittsweise hinterschneidet.

6. Kraftfahrzeug, insbesondere elektromotorisch antreibbares Kraftfahrzeug, welches wenigstens eine Batterie nach zumindest einem der Ansprüche 1 bis 4 umfasst, wobei die Batterie mit einem Antriebssystem des Kraftfahrzeuges verbunden ist.

## Claims

1. Battery, in particular lithium-ion battery, which comprises at least one battery module (1), which has at least one battery cell (10), and a base plate (20) which serves for installing and/or fixing the battery module (1), wherein the battery module (1) is connected or can be connected to the base plate (20) in such a way that at least the translational degree of freedom (30) of the battery module (1) perpendicular to the base plate (20) is blocked, and wherein the blocking is realized by means of a locking element (40) which can be moved with at least one movement component substantially perpendicular to the direction of the degree of freedom (30) to be blocked in such a way that at least one shaped element (60) of the base plate (20) is undercut by a locking section (50) which is arranged on the locking element (40), and the locking element (40) is a constituent part of the battery module (1), **characterized in that** the battery module (1) has a tie rod (90) which comprises a wedge element (100) and at least one spreading element (110) which is movable relative to the wedge element (100), wherein the wedge element (100) can be moved or is positioned in such a way that at least one section of the spreading element (110) can be moved with at least one movement component perpendicular to the direction of the degree of freedom (30) to be blocked, so that the spreading element (110) which takes on the function of the locking section (50) undercuts the shaped element (60), which is formed by the base plate (20), at least in sections.

2. Battery according to Claim 1, wherein the shaped element (60) is formed by the surrounding material (22) of a hole (21) in the base plate (20).

3. Battery according to Claim 2, **characterized in** wherein that the hole (21) has a variable cross section over its length.

4. Battery according to at least one of the preceding claims, wherein the battery has a housing (2) which substantially surrounds the battery cells (10), wherein the base plate (20) is a constituent part of the housing (2).

5. Method for fitting a battery module (1) on or to a base plate (20) for producing a battery, in particular a lithium-ion battery, wherein that battery module (1) is connected to the base plate (20) in such a way that at least the translational degree of freedom (30) of the battery module (1) perpendicular to the base plate (20) is blocked, **characterized in that** the blocking is realized by means of a locking element (40) which can be moved with at least one movement component substantially perpendicular to the direction of the degree of freedom (30) to be blocked in such a way that at least one shaped element (60) of the base plate (20) is undercut by a locking section (50) which is arranged on the locking element (40), wherein the locking element (40) is a constituent part of the battery module (1) and the battery module (1) has a tie rod (90) which comprises a wedge element (100) and at least one spreading element (110) which is movable relative to the wedge element (100), wherein the wedge element (100) is moved in such a way that at least one section of the spreading element (110) is moved with at least one movement component perpendicular to the direction of the degree of freedom (30) to be blocked, so that the spreading element (110) which takes on the function of the locking section (50) undercuts the shaped element (60), which is formed by the base plate (20), at least in sections.

6. Motor vehicle, in particular motor vehicle which can be driven by electric motor, which comprises at least one battery according to at least one of Claims 1 to 4, wherein the battery is connected to a drive system of the motor vehicle.

## Revendications

1. Batterie, notamment batterie au lithium ion, qui comprend un module de batterie (1) comportant au moins un élément de batterie (10) et une plaque de base (20) servant à l'installation et/ou à la fixation du module de batterie (1), dans laquelle le module de batterie (1) est relié ou peut être relié à la plaque de base (20) de manière à ce qu'au moins le degré de liberté de translation (30) du module de batterie (1) perpendiculairement à la plaque de base (20) soit bloqué, et dans lequel le blocage est réalisé au moyen d'un élément de verrouillage (40) qui peut être déplacé avec au moins une composante de mouvement sensiblement perpendiculaire à la direction du degré de liberté (30) devant être bloqué de manière à ce qu'au moins un élément façonné (60) de la plaque de base (20) soit contre-dépouillé par une section de verrouillage (50) disposée sur l'élément de verrouillage (40), et dans laquelle l'élément de verrouillage (40) fait partie du module de batterie (1), **caractérisée en ce que** le module de batterie (1) comporte un tirant (90) comprenant un élément en coin (100) ainsi qu'un élément d'écartement (110) mobile par rapport à l'élément en coin (100), dans lequel l'élément en coin (100) peut être déplacé ou est positionné de manière à ce qu'au moins une section de l'élément d'écartement (110) puisse être déplacée avec au moins une composante de mouvement perpendiculaire à la direction du degré de liberté (30) devant être bloqué, afin que l'élément d'écartement (110) reprenant la fonction de la section de verrouillage (50) contre-dépouille au moins par sections l'élément façonné (60) formé par la plaque de base (20).

2. Batterie selon la revendication 1, dans laquelle l'élément façonné (60) est formé par le matériau environnant (22) d'un orifice (21) ménagé dans la plaque de base (20).

3. Batterie selon la revendication 2, **caractérisée** en ce dans laquelle que l'orifice (21) présente une section transversale non constante suivant sa longueur.

4. Batterie selon au moins l'une des revendications précédentes, dans laquelle la batterie comporte un boîtier (2) qui entoure sensiblement les éléments de batterie (10), dans laquelle la plaque de base (20) fait partie du boîtier (2).

5. Procédé de montage d'un module de batterie (1) sur ou au niveau d'une plaque de base (20) destinée à la fabrication d'une batterie, notamment d'une batterie au lithium ion, dans lequel que module de batterie (1) est relié à la plaque de base (20) de manière à ce qu'au moins le degré de liberté de translation (30) du module de batterie (1) perpendiculairement à la plaque de base (20) soit bloqué, **caractérisé en ce**
**que** le blocage est réalisé au moyen d'un élément de verrouillage (40) qui est mobile avec au moins une composante de mouvement sensiblement perpendiculaire à la direction du degré de liberté (30) devant être bloqué de manière à ce qu'au moins un élément façonné (60) de la plaque de base (20) soit contre-dépouillé par une section de verrouillage (50) disposée sur l'élément de verrouillage (40), dans lequel l'élément de verrouillage (40) fait partie du module de batterie (1) et l'élément de batterie (1) comporte un tirant (90) comprenant un élément en coin (100) ainsi qu'au moins un élément d'écartement (110) mobile par rapport à l'élément en coin (100), dans lequel l'élément en coin (100) est déplacé de manière à ce qu'au moins une section de l'élément d'écartement (110) soit déplacée avec au moins une composante de mouvement perpendiculaire à la direction du degré de liberté (30) devant être bloqué afin que l'élément d'écartement (110) reprenant la fonction de la section de verrouillage (50) contre-dépouille au moins par sections l'élément façonné (60) formé par la plaque de base (20).

6. Véhicule automobile, notamment véhicule automobile pouvant être entraîné par un moteur électrique, comprenant au moins une batterie selon l'une quelconque des revendications 1 à 4, dans lequel la batterie est reliée à un système d'entraînement du véhicule automobile.
